# EUROPEAN PATENT SPECIFICATION

(11) **EP 3 738 485 B1**
(45) Date of publication and mention of the grant of the patent: **19.01.2022**
(21) Application number: 20161660.4
(22) Date of filing: 06.03.2020
(51) Int. Cl.: A47J 31/56, A47J 31/36

(54) **COFFEE MACHINE**
KAFFEEMASCHINE
MACHINE À CAFÉ

(30) Priority: 15.05.2019 IT 201900006864
(43) Date of publication of application: 18.11.2020
(73) Proprietor: Gemme Italian Producers S.r.l., 25045 Castegnato (Brescia) (IT)
(72) Inventor: EPIS, Mauro, 25045 Castegnato (Brescia) (IT)
(74) Representative: Gamba, Alessandro

(56) References cited:
- EP-A1- 0 328 705
- EP-A1- 1 074 210
- EP-B1- 0 328 705
- US-A- 3 314 357
- US-A- 5 613 422

## Description

The present invention relates to a coffee machine for domestic use. The present invention also relates to the operating method of said coffee machine.

In particular, in the present description, "coffee machine for domestic use" means those types of machines suitable to deliver an infused beverage like coffee that due to their size and use are suitable to be placed in a domestic environment. This means that the "coffee machine for domestic use" is compact in size, unlike coffee machines used in bars, which are of a large size (comprising, for example, a plurality of filter holders into which the powdered coffee is inserted and through which the beverage is dispensed). This also means that the "coffee machine for domestic use" has the purpose of and is optimized for dispensing a limited number of coffees, unlike coffee machines used in bars designed specifically to dispense a large number of coffees, even continuously throughout the course of a day.

Entering into greater detail, the coffee machine of the present invention is provided with a dispensing group of type E61. In other words, the coffee machine of the present invention dispenses coffee through an E61 dispensing group, incorporating the principles of operation, and having the form, dimensions and materials of the renowned "Faema E61" group. The type E61 dispensing group is well known in specialist environments, as well as being covered by specific patents such as documents US3230874 and US3314357.

In particular, in the solutions of coffee machines, with particular reference to those for domestic use, it has been shown that the E61 group body, i.e. the body onto which a filter holder is removably mountable, encounters multiple difficulties in reaching and maintaining an optimum temperature for dispensing a coffee. In particular, said optimum temperature is a temperature at which the dispensed coffee is neither too cold nor too hot. An examples of said solution is known indocument EP328705A.

There is therefore a strong need to solve this problem by providing a coffee machine provided with a type E61 dispensing group in which the E61 group body has a controlled temperature, in particular an optimum temperature.

The aim of the present invention is to fulfil the above-mentioned need and is achieved thanks to a coffee machine provided with a type E61 dispensing group in which the temperature of the E61 group body is controlled in accordance with that claimed in claim 1. At the same time, this aim is achieved by an operating method of a coffee machine according to claim 9. The claims dependent thereon describe additional preferred embodiments.

The characteristics and advantages of the coffee machine and the operating method of a coffee machine will become clear from the following description, given by way of non-limiting example, according to the accompanying claims, in which:
- Figure 1 shows a coffee machine according to a preferred embodiment of the present invention;
- Figures 2a and 2b show two perspective views respectively of some components comprised in the coffee machine according to in claim 1;
- Figure 3 shows a cross-sectional view of that shown in Figures 2a and 2b;

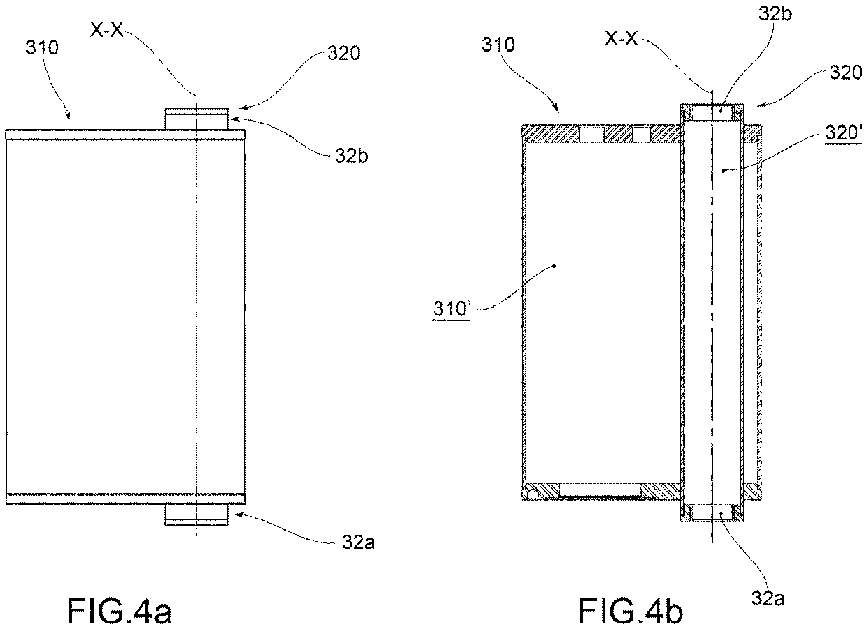

- Figures 4a and 4b show a side view and a cross-sectional view respectively of a boiler body and an exchanger body comprised in the coffee machine shown in the preceding figures;
- Figure 5 shows a flow chart that represents some operating steps of an operating method of the coffee machine in question according to the present invention, in particular the steps of switching on the previously switched off machine;
- Figures 6, 6a and 6b show three portions of said flow chart in which some operating steps of an operating method of a coffee machine according to the present invention are shown, in particular the steps of heating the machine previously subject to the steps illustrated in the flow chart in Figure 5;
- Figure 7 shows a flow chart in which some operating steps of an operating method of a coffee machine according to the present invention are shown, in particular the steps of maintaining the temperature of the machine.

In the accompanying figures, the reference numeral 1 indicates a coffee machine according to the present invention.

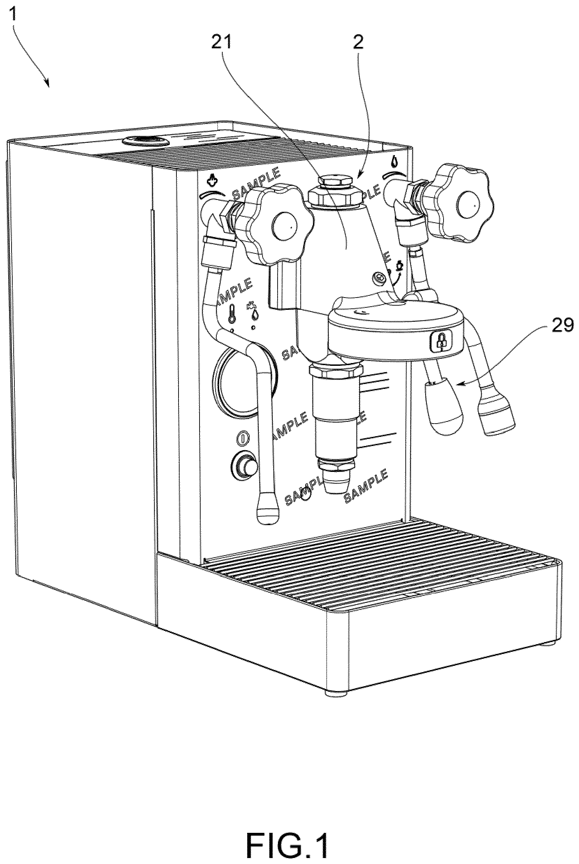

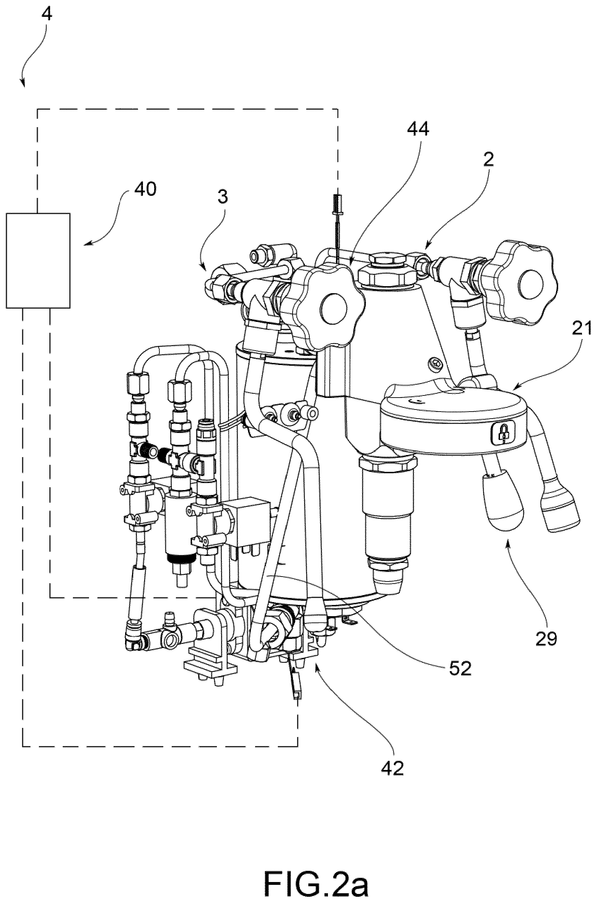

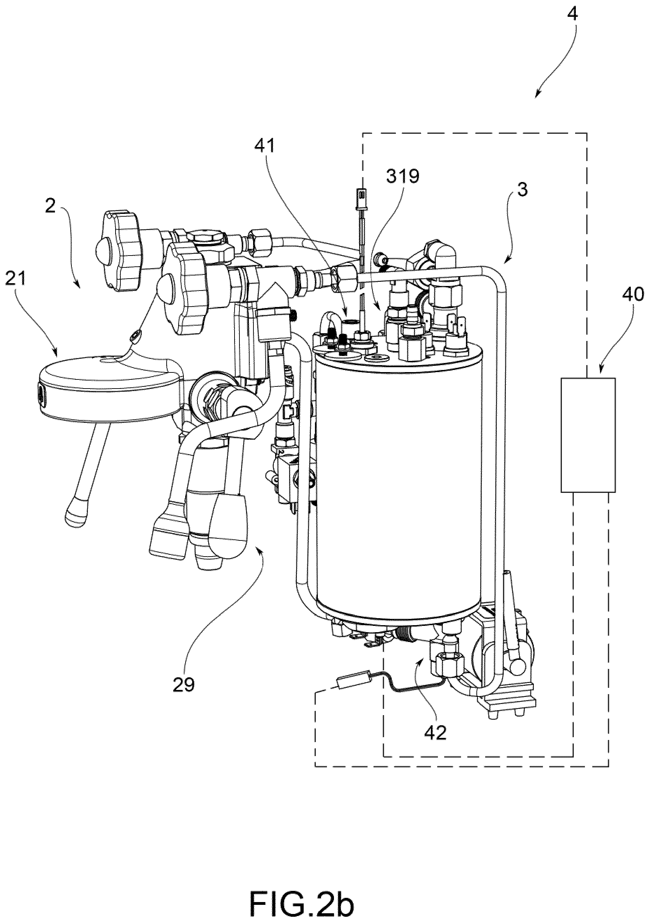

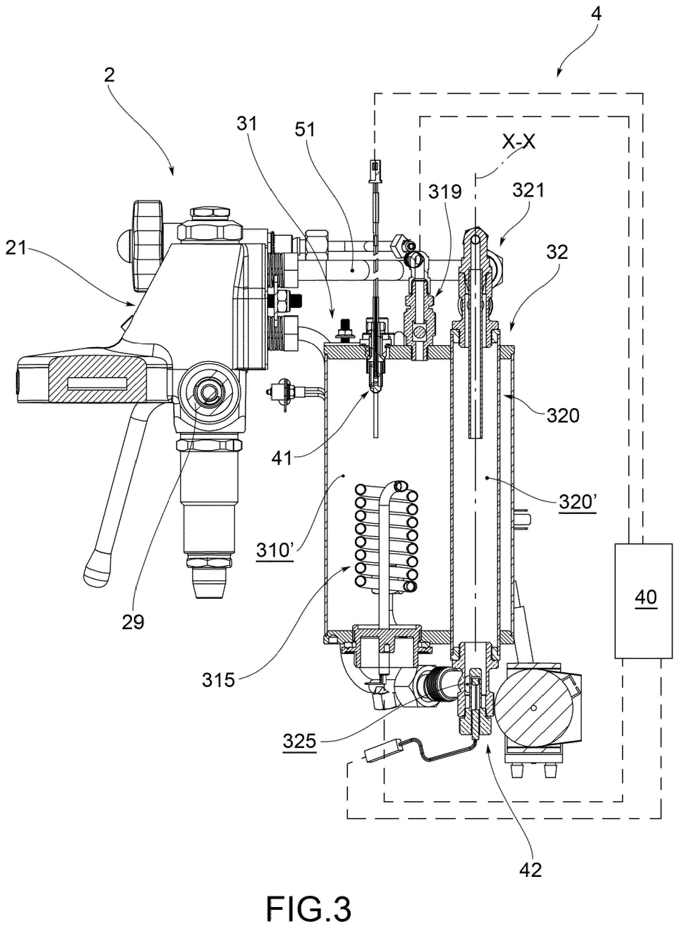

Furthermore, as the aim of the present invention and as clearly shown in Figures 1 to 3, the coffee machine 1 comprises a type E61 dispensing group. More specifically, the characteristics of said type E61 dispensing group are the "conventional" ones, traditionally known in the target market of coffee machines. In other words, in the coffee machine 1 of the present invention no modification has been made to the E61 dispensing group that has well-known principles of operation, form, dimensions and materials. For practicality, the E61 dispensing group will henceforth be referred to only as the dispensing group.

Said dispensing group 2 comprises a group body 21 on which a filter holder is removably mountable. As is traditionally known, water flows in the dispensing group 2 in order to heat the group body 21 and/or to dispense the beverage through the filter holder mounted thereon.

As stated, and with particular reference to Figure 1, it will be noted that it is possible to mount on the coffee machine a filter holder suitable for containing a predefined quantity of powder (not shown in the figures). The form and dimensions of the filter holder in no way limit the present invention, with the exception of the fact that it must be mountable on the group body 21 having the typical dimensions of the E61 group body.

According to the present invention, the coffee machine 1 comprises a heating group 3 suitable for heating a predefined quantity of water to heat the group body 21 and/or dispense the beverage through the filter holder. Furthermore, the heating group 3 is suitable for heating a predefined quantity of water in order to produce and dispense hot water (for example usable for consuming tea or infusions) and/or suitable for heating a predefined quantity of water in order to transform it into steam.

According to the present invention, the heating group 3 comprises a boiler device 31 and a heat exchanger 32. In particular, said boiler device 31 is suitable for housing the heat exchanger 32 and regulating the temperature thereof, in particular of the water that flows therein.

The boiler device 31 comprises a boiler body 310 that defines a boiler chamber 310' which houses a predefined quantity of water.

Furthermore, the boiler device 31 comprises a heating element 315 housed in said boiler chamber 310' and suitable for heating said predefined quantity of water until it is transformed into steam.

Said heat exchanger 32 comprises a tubular-shaped exchanger body 320 that defines therein an exchanger chamber 320' .

Within said exchanger chamber 320' flows a predefined quantity of water to and from the dispensing group 2. In other words, the heat exchanger 320 substantially has the form of a duct with two mouths, one at either axial end, that are fluidically connected, by means of appropriate ducts comprised in the machine, to the dispensing group 2.

In particular, the exchanger chamber 320' extends along an X-X axis of the exchanger. Preferably, said exchanger axis X-X is in a substantially vertical position. This means that the exchanger chamber 320' has a lower mouth 32a and an upper mouth 32b.

As stated, according to the present invention, the exchanger body 32 is substantially housed in the boiler body 31. According to a preferred embodiment, as shown in the accompanying figures, the exchanger body 32 is almost entirely housed in the boiler body 31, only the axial ends and therefore the lower mouth 32a and the upper mouth 32b are outside the boiler body 31 and can be engaged by appropriate connecting elements (some of which are described below) comprised in the machine for fluidic connection with the above-mentioned ducts.

According to a preferred embodiment, the heat exchanger 32 comprises a lower connector 322 suitable for fluidically connecting a return duct 52 to the exchanger chamber 320 for the return flow of the water. In particular, said return duct extends from the group body 21 to the exchanger chamber 320 and within it flows the return water from the group body 21, i.e. the water that has already exchanged heat with said group body 21.

According to this preferred embodiment, it is the other mouth, i.e. the upper mouth 32b, that fluidically connects on the delivery line the group body E61 with the exchanger chamber 320' by means of an appropriate delivery duct 51. In particular, in the upper part the heat exchanger 32 comprises an upper connector appropriately formed to fluidically connect the upper mouth 32b to the delivery duct 51.

According to a preferred embodiment, the heat exchanger 32 comprises a water injector 321 fluidically connected to a water tank to inject a predefined amount of water into the exchanger chamber 320'.

According to a preferred embodiment, the water injector 321 is positioned in a head region, i.e. in an upper region of the exchanger chamber 320'. Preferably, the water injector 321 is positioned proximal to the upper mouth 32b (comprised, for example, in the upper connection). In fact, preferably, water flows in, through the upper mouth 32b, by means of the water injector 321, but water also flows out towards the delivery duct 51. In particular, the water injector 321 injects through the upper mouth 32b cold water, which goes to the bottom of the exchanger chamber, while, through the upper mouth 32b, hot water exits towards the group body E61. According to this description, in the exchanger chamber 320', the water is subject to specific convective movements.

According to a preferred embodiment, the boiler body 310 extends in height parallel to the axis X-X. Preferably, the boiler body 310 is substantially cylindrical in shape.

According to a preferred embodiment, therefore, the boiler body 310 and the exchanger body 320 are made of a material suitable for food applications. In fact, according to a preferred embodiment, the boiler body 310 and the exchanger body 320 are made of a material free of lead particles. In other words, the boiler body 310 and the exchanger body 320 are not made of copper or a copper alloy.

According to a preferred embodiment of the present invention, the boiler body 310 and the exchanger body 320 are made of a material chosen from among the steel alloys. Preferably, the boiler body 310 and the exchanger body 320 are made of AISI 316 steel.

Furthermore, according to the present invention, the coffee machine 1 comprises a temperature control and regulation device 4. In particular, by means of said temperature control and regulation device 4, the temperature in the above-mentioned boiler chamber 310' and exchanger chamber 320' is controlled and regulated so as to control the temperature of the water that flows within the group body 21, thus controlling the temperature and quality of the coffee to be dispensed.

The temperature control and regulation device 4 in fact comprises a first probe 41 that detects the temperature inside the boiler chamber 310' and a second probe 42 that detects the temperature of the water inside the exchanger chamber 320'.

Preferably, the first probe 41 is housed inside the boiler chamber 310' wetted by water and/or steam to measure the temperature thereof directly. According to a preferred embodiment, the first probe 41 is positioned in an upper region.

Preferably, the second probe 42 is housed inside the boiler chamber 320' wetted by water flowing therein to measure the temperature thereof directly. According to a preferred embodiment, the second probe 42 is positioned in a lower region; this means that the second probe 42 is wetted firstly by the water flowing inside the return duct 52. Preferably, the second probe 42 is supported and housed on said lower connector 322.

According to the present invention, the temperature control and regulation device 4 comprises a control unit 40 connected both to said first probe 41 and to said second probe 42 to receive the detected temperature values.

In addition, said control unit 40 is connected to the heating element 315 and commands the switching on or the switching off thereof according to the temperature values detected by the first probe 41 and the second probe 42.

According to the present invention, the temperature of the boiler chamber 310' is managed depending on requirements and in particular depending on the temperature of the water in the exchanger chamber 320'. In particular the temperature of the boiler chamber 310' is managed depending on the temperature of the water in the exchanger chamber 320', in particular of the return water from the group body 21.

According to the present invention, the temperature of the boiler chamber 310' is therefore regulated depending on the temperature of the return water from the E61 dispensing body, the temperature of which is variable depending on the temperature of the body, and therefore depending on the heat exchange that it undergoes.

In other words, the command unit 40 stores a series of working configurations of different operating modes (the switching on or switching off timing of the heating element) depending on the operating conditions of the machine - i.e. both depending on that detected by the first probe 41 and by the second probe 42 - and depending on the mode of use of the machine - i.e., with the machine dispensing, or with the machine at rest. Preferably, in these operating conditions, the first probe 41 and the second probe 42 are required to send a signal to the command unit 40 depending on whether a different temperature to that desired has been detected.

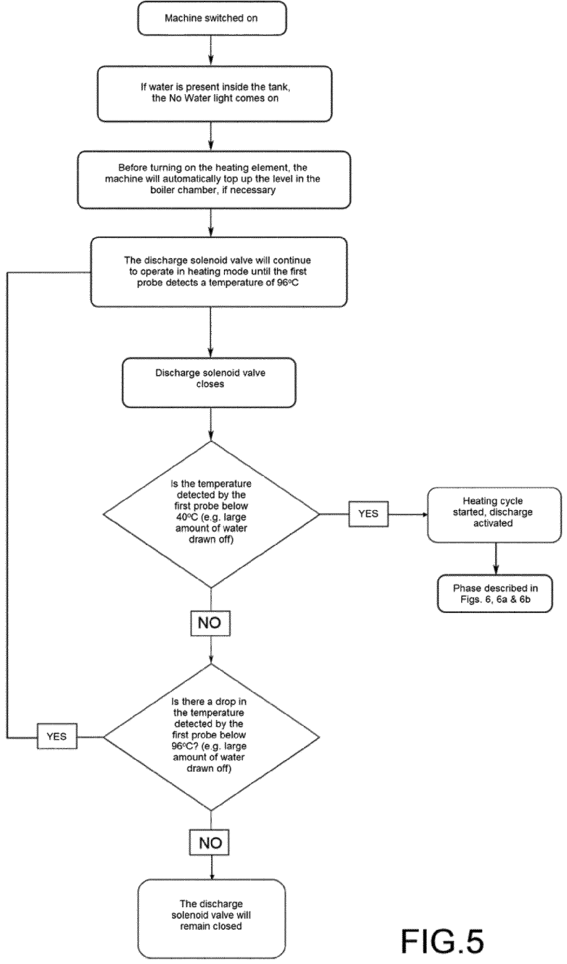

A detailed description of the operating method of such a coffee machine 1 is given below and in Figures 5 to 7.

According to an additional preferred embodiment, the boiler device 31 also comprises a discharge solenoid valve 319 suitable for discharging any undesired pressure in the boiler chamber 310'. Preferably, said discharge solenoid valve 319 is commanded electrically depending on needs.

According to a preferred embodiment, the discharge solenoid valve 319 is connected to the control unit 40 and is commandable by the latter to activate depending on the machine's operating needs. More specifically, the discharge solenoid valve 319 is normally in a closed configuration and is commanded to open only on the basis of specific needs.

Furthermore, according to a preferred embodiment, the control unit 40 is also connected to the coffee command lever 29 comprised in the E61 dispensing group and, depending on the position thereof, the control unit 40 commands a desired temperature inside the boiler chamber 310'; in particular, it is so arranged that the first probe 41 and the second probe 42 shall send a signal to the control unit only when a set temperature value is reached.

Furthermore, as stated, the subject matter of the present invention also relates to an operating method of a coffee machine.

In particular, the subject matter of the present invention relates to the operating method of a coffee machine having the above-described characteristics.

In particular, this operating method comprises the steps of:
- detecting, by means of the first probe 41, the temperature inside the boiler chamber 310';
- detecting, by means of the second probe 42, the temperature of the water inside the exchanger chamber 320';
- commanding the switching on or the switching off of the heating element 315 according to the temperature values measured by the first probe 41 and by the second probe 42.

Preferably, a turning on of the heating element 315 is commanded, so as to cause an increase in the temperature inside the boiler chamber 310' that can be detected by the first probe 41, in an operating configuration wherein the second probe 42 detects a temperature value lower than a predefined threshold value.

Or alternatively, the operating method of the machine comprises the step of:
- commanding the position of the discharge solenoid valve 319 avoiding pressure discharges in a working configuration with the heating element 315 operated in heating mode.

Entering further into the detail of the operating method of the machine, with particular reference to the accompanying figures and, in particular, with reference to Figure 5, the switching on of the machine is described.

On switching on, firstly, the coffee machine checks for the presence of water in its tank and, if applicable, sends an alarm signal.

Secondly, before switching on the heating element 315 the quantity of water in the boiler chamber 310' is topped up.

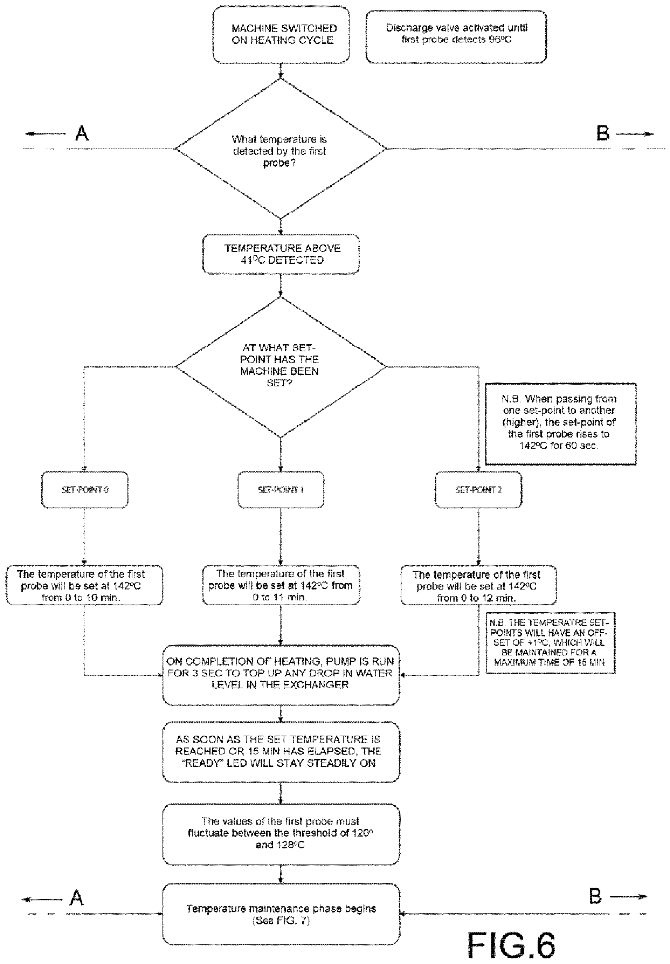

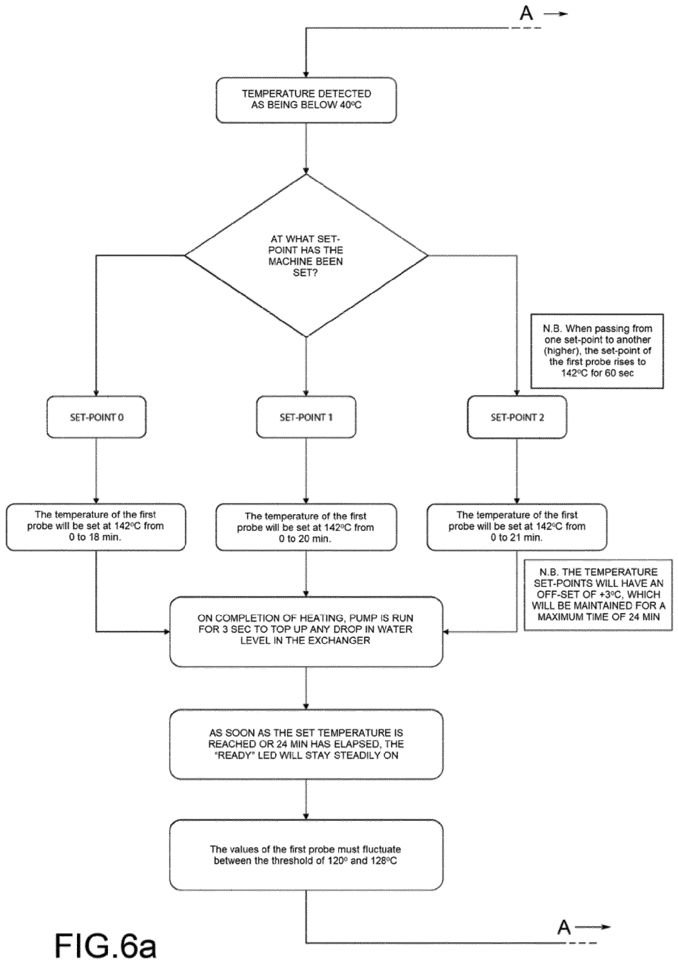

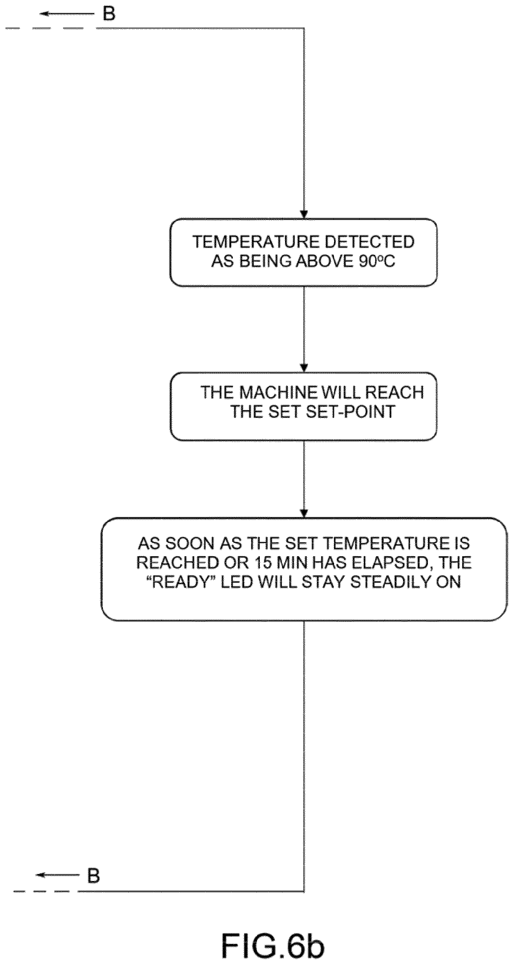

By means of the first probe 41, the temperature of the boiler chamber 310' is checked: depending on the temperature detected, a specific heating sequence begins (Figures 6, 6' and 6").

Throughout this, the discharge solenoid valve 319 is commanded to operate, i.e. to open, until the first probe 41 detects the temperature of 96°C.

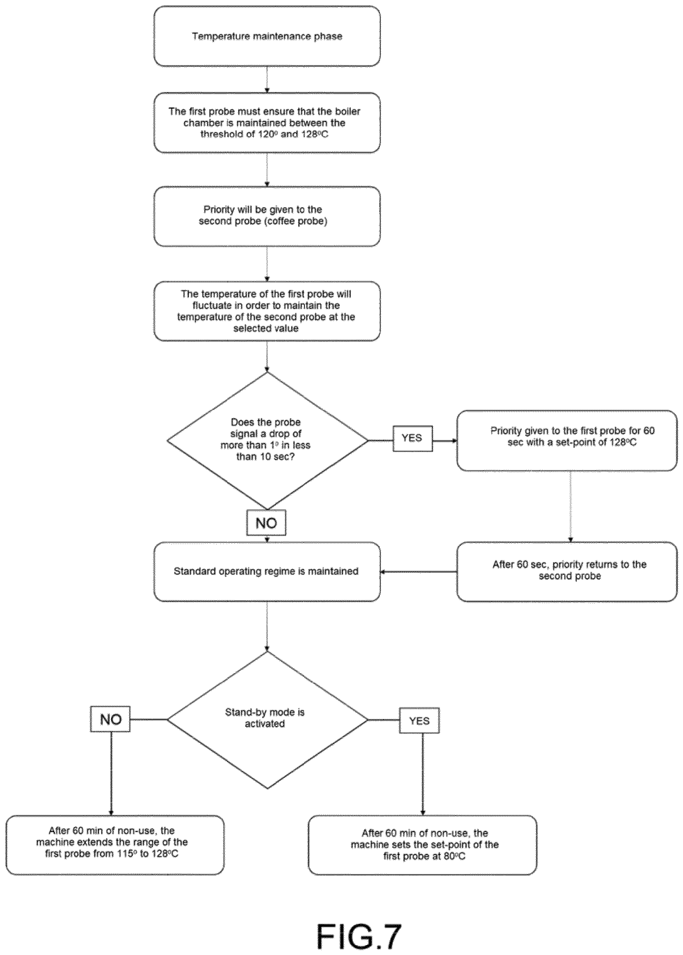

As stated, depending on the temperature value detected by the first probe 41, a specific heating procedure is performed; the flow charts in Figures 6, 6' and 6" show the relative procedures performed by the coffee machine depending on the temperature detected in the boiler chamber, i.e. below 40°C, between 41°C and 90°C, and above 90°C. The purpose of the heating procedure is to bring the temperature of the boiler chamber 310' to between 120°C and 128°C. Once this temperature is reached, the second probe 42 takes precedence and, on the basis of its measurements, the steps of maintaining the temperature shown in the flow chart in Figure 7 are performed.

Substantially, the different heating processes are such as to bring the temperature of the heating chamber 310' to the predefined temperature in the shortest time possible.

For example, with an initial starting temperature detected as being below 40°C, the machine can be set with a temperature of the heating chamber 310' at 142°C for a time of between 18 and 21 minutes (the control unit can be configured in three different operating modes depending on needs and the temperatures detected).

Conversely, with an initial starting temperature detected as being between 40°C and 90°C, the machine can be set with a temperature of the heating chamber 310' at 142°C for a time of between 10 and 12 minutes (the control unit can be configured in three different operating modes depending on needs and the temperatures detected).

Furthermore, with an initial starting temperature detected as being above 90°C, the machine can be set with a temperature of the heating chamber 310' at 142°C for a necessary time, less than 10 minutes.

On completion of these processes, the first probe 41 will detect a temperature of between 120°C and 128°C and the machine will pass into maintenance mode.

Once this stage is reached, the detection performed by the second probe 42 takes precedence, which continues to measure the exchanger temperature to check for any variations in the desired operating conditions.

Then, as a result of this detection by the second probe 42, the temperature control and regulation device 4, and in particular the control unit 40, continues to command the switching on of the heating element 315 to ensure that the boiler chamber 310' is "hot" (i.e. ready for use), that is to say, to ensure that the first probe 41 continues to detect a temperature of between 120°C and 128°C.

Preferably, the machine is then suitable for detecting any changes in the return water - up and/or down - then detecting the relative change in temperature of the E61 group body, acting rapidly accordingly, by activating or not activating the heating element.

In accordance with the above, it will be noted that the above-mentioned temperatures and timings are given purely by way of example, with reference to the accompanying flow charts. However, the temperatures indicated have a delta variability of between 3 and 6°C.

Furthermore, the temperature control and regulation device 4 is also connected to the pump groups and injectors in order to manage, according to needs, the intake of water into the boiler chamber 310' and above all into the exchanger chamber 320'.

Furthermore, preferably the temperature control and regulation device 4, by managing the temperature of the chambers and activating the discharge solenoid valve, also performs a standby procedure. During this standby procedure, the coffee machine (or more specifically, the dispensing body) is capable of maintaining a set temperature for a predefined period of time, thus being ready for use without requiring further heating operations.

Innovatively, the coffee machine and the operating method of a coffee machine according to the present invention amply meet the envisaged aim, by solving the above-mentioned technical problem typical of state-of-the-art solutions.

Advantageously, the coffee machine manages the temperature of the E61 group body by preventing the latter from being excessively hot or excessively cold and therefore from producing a coffee that is excessively hot (or even burnt) or excessively cold respectively.

Advantageously, the coffee machine detects both the temperature of the boiler chamber and the temperature of the water in the exchanger chamber and detects with certainty the state of the machine. Advantageously, the machine (in particular the E61 group body) reaches an optimum temperature in an extremely short time compared to the currently known solutions of machines.

Advantageously, the coffee machine maintains the ideal temperature.

Advantageously, the coffee machine reacts to any changes in temperature of the E61 group body.

Advantageously, the second probe detects the temperature of the return water from the group body. Advantageously, detection by the second probe is not influenced by other external factors.

Advantageously, the coffee machine has one boiler body and one exchanger body made of a lead-free material suitable for food applications. Advantageously, the boiler body and the exchanger body are made of steel, and are thus capable of taking advantage of all of the advantages typical of steel. Advantageously, the coffee machine comprises a limited number of components made of brass and/or containing lead.

Advantageously, the coffee machine has a specific application in domestic use, being available at an optimum temperature even in the event of coffee being dispensed infrequently and/or not continuously. In other words, even with a domestic use of the coffee machine covered by the present invention, i.e. a use that involves dispensing a few coffees throughout the course of a day, unlike the dispensing of hundreds of coffees throughout the course of a typical day of coffee bar machines, the quality (and particularly the temperature) of the coffee dispensed is always optimal.

Advantageously, other additional probes are also used in the machine to detect additional temperatures.

It will be noted that each variation described as belonging to a possible embodiment can be created independently of the other variations.

Clearly, a person skilled in the art, in order to meet contingent requirements, could make modifications to the above-described coffee machine, all being within the scope of protection as defined by the following claims.

## Claims

1. A coffee machine (1) for domestic use comprising:
- a dispensing group (2) of type E61, comprising a group body (21) of type E61, on which a filter holder is removably mountable, wherein water flows in the dispensing group (2) for heating the E61 group body (21) and/or for dispensing the beverage through a filter holder;
- a heating group (3) comprising:
i) a boiler device (31) comprising a boiler body (310), which defines a boiler chamber (310'), in which a predefined quantity of water is housed, and a heating element (315), suitable for heating said predefined quantity of water until it is transformed into steam;
ii) a heat exchanger (32), comprising a tubular-shaped exchanger body (320), which defines therein along an exchanger axis (X-X) an exchanger chamber (320') in which a predefined quantity of water flows to and from the dispensing group (2), wherein said exchanger body (32) is substantially housed in the boiler body (31);
- a temperature command and regulation device (4) comprising:
1) a first probe (41), which detects the temperature inside the boiler chamber (310'); wherein the coffee machine (1) is **characterized by** the fact that the temperature command and regulation device (4) also comprises:
m) a second probe (42), which detects the temperature of the water inside the exchanger chamber (320');
n) a command unit (40) connected to said first probe (41), to said second probe (42) and to the heating element (315) to command the latter during switching on or off according to the temperature values detected by the first probe (41) and by the second probe (42).

2. Coffee machine (1) according to claim 1, wherein the first probe (41) is housed within the boiler chamber (310') wetted by water and/or steam to measure the temperature thereof directly, wherein the second probe (42) is housed inside the exchanger chamber (320') wetted by water flowing therein to measure the temperature directly.

3. Coffee machine (1) according to any of the preceding claims, wherein said exchanger axis (X-X) is in a substantially vertical position.

4. Coffee machine (1) according to claim 3, wherein the second probe (42) is positioned in a bottom region, i.e. in a lower region of the exchanger chamber (320'), proximal to a return mouth (322) through which water flows from the E61 body group (2).

5. Coffee machine (1) according to claim 4, wherein the heat exchanger (32) comprises a lower connector (322) suitable to fluidically connect a return duct (52) with the exchanger chamber (320) for the return flow of water, wherein said second probe (42) is supported and housed on said lower connector (322).

6. Coffee machine (1) according to any of claims 3 to 5, wherein the heat exchanger (32) comprises a water injector (321) fluidically connected to a water tank to inject a predefined amount of water into the exchanger chamber (320'), wherein said water injector (321) is positioned in a head region, i.e. in an upper region of the exchanger chamber (320').

7. Coffee machine (1) according to any of the preceding claims, wherein the boiler device (31) further comprises a discharge solenoid valve (319) suitable to discharge any pressures in the boiler chamber (310'), wherein said discharge solenoid valve (319) is connected to the command unit (4) and is thereby commandable in operation according to the operational needs of the machine.

8. Coffee machine (1) according to any of the preceding claims, wherein the boiler body (310) and the exchanger body (320) are made of a material chosen from among the steel alloys.

9. Operating method of a coffee machine (1) according to any of the preceding claims comprising the steps of:
- detecting, by means of the first probe (41), the temperature within the boiler chamber (310');
- detecting, by means of the second probe (42), the temperature of the water inside the exchanger chamber (320');
- commanding the switching on or the switching off of the heating element (315) according to the temperature values measured by the first probe (41) and the second probe (42).

10. Operating method of a coffee machine (1) according to claim 9, wherein the command unit (40) commands the turning on the heating element (315) in an operating configuration wherein the second probe (42) detects a temperature value lower than a desired predefined threshold value.

11. Operating method of a coffee machine (1) according to any of claims 9 and 10, in combination with claim 7, comprising the step of:
- commanding the position of the discharge solenoid valve (319) avoiding pressure discharge in a working configuration with the heating element (315) operated in heating mode.

## Patentansprüche

1. Kaffeemaschine (1) für den häuslichen Gebrauch, umfassend:
- eine Abgabegruppe (2) des Typs E61, welche einen Gruppenkörper (21) des Typs E61 umfasst, an welchem ein Filterhalter lösbar montierbar ist, wobei Wasser in der Abgabegruppe (2) strömt, um den E61-Gruppenkörper (21) zu erwärmen und/oder um das Getränk durch einen Filterhalter abzugeben;
- eine Heizgruppe (3), umfassend:
i) eine Boilervorrichtung (31), welche einen Boilerkörper (310), der eine Boilerkammer (310') definiert, in welcher eine vordefinierte Menge von Wasser aufgenommen ist, und ein Heizelement (315) umfasst, welches dazu geeignet ist, die vordefinierte Menge von Wasser zu erwärmen, bis sie in Dampf umgewandelt ist;
ii) einen Wärmetauscher (32), welcher einen rohrförmigen Tauscherkörper (320) umfasst, welcher darin entlang einer Tauscherachse (X-X) eine Tauscherkammer (320') definiert, in welcher eine vordefinierte Menge von Wasser zu und aus der Abgabegruppe (2) strömt, wobei der Tauscherkörper (32) im Wesentlichen in dem Boilerkörper (31) aufgenommen ist;
- eine Temperatur-Steuer- und Regelvorrichtung (4), umfassend:
l) eine erste Sonde (41), welche die Temperatur innerhalb der Boilerkammer (310') detektiert;
wobei die Kaffeemaschine (1) durch die Tatsache gekennzeichnet ist, dass die Temperatur-Steuer- und Regelvorrichtung (4) ebenfalls umfasst:
m) eine zweite Sonde (42), welche die Temperatur des Wassers innerhalb der Tauscherkammer (320') detektiert;
n) eine Steuereinheit (40), welche mit der ersten Sonde (41), mit der zweiten Sonde (42) und mit dem Heizelement (315) verbunden ist, um das Letztere während eines Ein- oder Ausschaltens gemäß den von der ersten Sonde (41) und von der zweiten Sonde (42) detektierten Temperaturwerten zu steuern.

2. Kaffeemaschine (1) nach Anspruch 1, wobei die erste Sonde (41) benetzt von Wasser und/oder Dampf in der Boilerkammer (310') aufgenommen ist, um die Temperatur davon direkt zu messen, wobei die zweite Sonde (42) benetzt von darin strömendem Wasser innerhalb der Tauscherkammer (320') aufgenommen ist, um die Temperatur direkt zu messen.

3. Kaffeemaschine (1) nach einem der vorhergehenden Ansprüche, wobei die Tauscherachse (X-X) in einer im Wesentlichen vertikalen Position vorliegt.

4. Kaffeemaschine (1) nach Anspruch 3, wobei die zweite Sonde (42) in einem Bodenbereich, d. h., in einem unteren Bereich, der Tauscherkammer (320') proximal zu einer Rücklauföffnung (322) positioniert ist, durch welche Wasser aus der E61-Körpergruppe (2) strömt.

5. Kaffeemaschine (1) nach Anspruch 4, wobei der Wärmetauscher (32) einen unteren Verbinder (322) umfasst, welcher dazu geeignet ist, eine Rücklaufleitung (52) für den Rücklauf von Wasser fluidisch mit der Tauscherkammer (320) zu verbinden, wobei die zweite Sonde (42) an dem unteren Verbinder (322) gehaltert und aufgenommen ist.

6. Kaffeemaschine (1) nach einem der Ansprüche 3 bis 5, wobei der Wärmetauscher (32) einen Wasserinjektor (321) umfasst, welcher fluidisch mit einem Wasserbehälter verbunden ist, um eine vordefinierte Menge von Wasser in die Tauscherkammer (320') einzuspritzen, wobei der Wasserinjektor (321) in einem Kopfbereich, d.h., in einem oberen Bereich, der Tauscherkammer (320') positioniert ist.

7. Kaffeemaschine (1) nach einem der vorhergehenden Ansprüche, wobei die Boilervorrichtung (31) ferner ein Auslassmagnetventil (319) umfasst, welches dazu geeignet ist, jegliche Drücke in der Boilerkammer (310') abzulassen, wobei das Auslassmagnetventil (319) mit der Steuereinheit (4) verbunden ist und dadurch im Betrieb gemäß den betrieblichen Anforderungen der Maschine steuerbar ist.

8. Kaffeemaschine (1) nach einem der vorhergehenden Ansprüche, wobei der Boilerkörper (310) und der Tauscherkörper (320) aus einem Material hergestellt sind, welches aus den Stahllegierungen ausgewählt ist.

9. Betriebsverfahren einer Kaffeemaschine (1) nach einem der vorhergehenden Ansprüche, umfassend die folgenden Schritte:
- Detektieren, mittels der ersten Sonde (41), der Temperatur in der Boilerkammer (310');
- Detektieren, mittels der zweiten Sonde (42), der Temperatur des Wassers innerhalb der Tauscherkammer (320');
- Befehlen des Einschaltens oder des Ausschaltens des Heizelements (315) gemäß den von der ersten Sonde (41) und der zweiten Sonde (42) gemessenen Temperaturwerten.

10. Betriebsverfahren einer Kaffeemaschine (1) nach Anspruch 9, wobei die Steuereinheit (40) das Einschalten des Heizelements (315) in einer Betriebskonfiguration befielt, wobei die zweite Sonde (42) einen Temperaturwert detektiert, welcher niedriger als ein gewünschter vordefinierter Schwellenwert ist.

11. Betriebsverfahren einer Kaffeemaschine (1) nach einem der Ansprüche 9 und 10 in Kombination mit Anspruch 7, umfassend den folgenden Schritt:
- Steuern der Position des Auslassmagnetventils (319), einen Druckablass in einer Arbeitskonfiguration verhindernd, wobei das Heizelement (315) in einem Heizmodus betrieben wird.

## Revendications

1. Machine à café (1) pour une utilisation domestique comprenant :
- un groupe de distribution (2) de type E61, comprenant un corps (21) de groupe de type E61, sur lequel un support de filtre peut être monté de manière amovible, dans lequel de l'eau s'écoule dans le groupe de distribution (2) pour chauffer le corps (21) de groupe E61 et/ou pour distribuer la boisson à travers un support de filtre ;
- un groupe de chauffage (3) comprenant :
i) un dispositif de chaudière (31) comprenant un corps (310) de chaudière, qui définit une chambre (310') de chaudière, dans laquelle une quantité prédéfinie d'eau est logée, et un élément chauffant (315), approprié pour chauffer ladite quantité prédéfinie d'eau jusqu'à ce qu'elle soit transformée en vapeur ;
ii) un échangeur de chaleur (32), comprenant un corps (320) d'échangeur de forme tubulaire, qui définit dans celui-ci le long d'un axe (X-X) d'échangeur une chambre (320') d'échangeur dans laquelle une quantité prédéfinie d'eau s'écoule vers et depuis le groupe de distribution (2), dans lequel ledit corps d'échangeur (32) est sensiblement logé dans le corps de chaudière (31) ;
- un dispositif de commande et de régulation de température (4) comprenant :
l) une première sonde (41), qui détecte la température à l'intérieur de la chambre (310') de chaudière ;
dans lequel la machine à café (1) est **caractérisée par le fait que** le dispositif de commande et de régulation de température (4) comprend également :
m) une seconde sonde (42), qui détecte la température de l'eau à l'intérieur de la chambre (320') d'échangeur ;
n) une unité de commande (40) connectée à ladite première sonde (41), à ladite seconde sonde (42) et à l'élément chauffant (315) pour commander ce dernier pendant la mise en marche ou l'arrêt selon les valeurs de température détectées par la première sonde (41) et par la seconde sonde (42).

2. Machine à café (1) selon la revendication 1, dans lequel la première sonde (41) est logée à l'intérieur de la chambre (310') de chaudière mouillée par de l'eau et/ou de la vapeur pour mesurer la température de celle-ci directement, dans lequel la seconde sonde (42) est logée à l'intérieur de la chambre (320') d'échangeur mouillée par de l'eau s'écoulant dans celle-ci pour mesurer la température directement.

3. Machine à café (1) selon l'une quelconque des revendications précédentes, dans lequel ledit axe (X-X) d'échangeur est dans une position sensiblement verticale.

4. Machine à café (1) selon la revendication 3, dans lequel la seconde sonde (42) est positionnée dans une région basale, à savoir dans une région inférieure de la chambre (320') d'échangeur, à proximité d'une embouchure de retour (322) à travers laquelle de l'eau s'écoule depuis le groupe (2) de corps E61.

5. Machine à café (1) selon la revendication 4, dans lequel l'échangeur de chaleur (32) comprend un connecteur inférieur (322) approprié pour connecter fluidiquement un conduit de retour (52) à la chambre (320) d'échangeur pour l'écoulement de retour de l'eau, dans lequel ladite seconde sonde (42) est supportée et logée sur ledit connecteur inférieur (322).

6. Machine à café (1) selon l'une quelconque des revendications 3 à 5, dans lequel l'échangeur de chaleur (32) comprend un injecteur d'eau (321) connecté fluidiquement à un réservoir d'eau pour injecter une quantité prédéfinie d'eau dans la chambre (320') d'échangeur, dans lequel ledit injecteur d'eau (321) est positionné dans une région de tête, à savoir dans une région supérieure de la chambre (320') d'échangeur.

7. Machine à café (1) selon l'une quelconque des revendications précédentes, dans lequel le dispositif de chaudière (31) comprend en outre une électrovanne de décharge (319) appropriée pour décharger toute pression dans la chambre (310') de chaudière, dans lequel ladite électrovanne de décharge (319) est connectée à l'unité de commande (4) et peut ainsi être commandée en cours de fonctionnement selon les besoins de fonctionnement de la machine.

8. Machine à café (1) selon l'une quelconque des revendications précédentes, dans lequel le corps (310) de chaudière et le corps (320) d'échangeur sont faits d'un matériau choisi parmi les alliages d'acier.

9. Procédé de fonctionnement d'une machine à café (1) selon l'une quelconque des revendications précédentes comprenant les étapes de :
- détection, au moyen de la première sonde (41), de la température à l'intérieur de la chambre (310') de chaudière ;
- détection, au moyen de la seconde sonde (42), de la température de l'eau à l'intérieur de la chambre (320') d'échangeur ;
- commande de la mise en marche ou de l'arrêt de l'élément chauffant (315) selon les valeurs de température mesurées par la première sonde (41) et la seconde sonde (42).

10. Procédé de fonctionnement d'une machine à café (1) selon la revendication 9, dans lequel l'unité de commande (40) commande l'allumage de l'élément chauffant (315) dans une configuration de fonctionnement dans laquelle la seconde sonde (42) détecte une valeur de température inférieure à une valeur seuil prédéfinie souhaitée.

11. Procédé de fonctionnement d'une machine à café (1) selon l'une quelconque des revendications 9 et 10, en combinaison avec la revendication 7, comprenant l'étape de :
- commande de la position de l'électrovanne de décharge (319) évitant une décharge de pression dans une configuration de travail avec l'élément chauffant (315) fonctionnant en mode chauffage.
